Europäisches Patentamt

European Patent Office

Office européen des brevets

(19)

(11) **EP 1 510 507 A1**

(12) **EUROPÄISCHE PATENTANMELDUNG**

(43) Veröffentlichungstag:
  **02.03.2005  Patentblatt 2005/09**

(21) Anmeldenummer: **03019241.3**

(22) Anmeldetag: **26.08.2003**

(51) Int Cl.[7]: **C04B 28/02**, C04B 28/06,
  C04B 16/08, F16L 59/00
   // (C04B28/02, 16:08, 24:26,
  24:38, 40:00),
  (C04B28/06, 7:02, 14:10, 16:08,
  24:26, 24:38, 40:00)

(84) Benannte Vertragsstaaten:
  **AT BE BG CH CY CZ DE DK EE ES FI FR GB GR
  HU IE IT LI LU MC NL PT RO SE SI SK TR**
  Benannte Erstreckungsstaaten:
  **AL LT LV MK**

(71) Anmelder: **Sika Plastiment GmbH
  6700 Bludenz-Bings (AT)**

(72) Erfinder: **Die Erfindernennung liegt noch nicht
  vor**

(74) Vertreter: **Isler, Jörg
  c/o Sika Technology AG,
  Geschäftsstelle Zürich,
  Tüffenwies 16,
  Postfach
  8048 Zürich (CH)**

(54) **Wärme- und Trittschalldämmstoff**

(57)  Es werden Dämmstoffzusammensetzungen zur Trittschall- und Wärmedämmung beschrieben, die sich dadurch kennzeichnen, dass sie ein polymeres geschlossenzelliges Schaumstoffgranulat, ein zementöses Bindemittel sowie mindestens ein Wasserrückhaltemittel umfassen. Diese Dämmstoffzusammensetzung können so formuliert werden, dass sie einen sehr grossen Anteil am Schaumstoffgranulat aufweisen und sehr wenig Zement. Die daraus hergestellten Dämmstoffe weisen gleichzeitig gute Festigkeiten und Dämmeigenschaften auf.

  Die Dämmstoffzusammensetzungen finden vor allem Einsatz im Estrich-Einbau.

Figur 1

EP 1 510 507 A1

**Beschreibung**

**Technisches Gebiet**

Die Erfindung betrifft Dämmstoffe für Wärme- und Trittschalldämmung, welche auf Basis von Schaumstoffgranulaten und zementösen Bindemitteln formuliert werden.

**Stand der Technik**

Wärme- und Trittschalldämmungen sind im modernen Gebäudebau sehr wichtig. Es ist bekannt, dass Schaumstoffe gute Dämmeigenschaften aufweisen. Weit verbreitet sind Schaumstoffe auf Basis von Polystyrol oder Polyurethan, sowie Steinwoll- oder Mineralwolleplatten. Üblicherweise werden diese Platten anschliessend mit einer Deckschicht, zum Beispiel erdfeucht verarbeitetem Unterlagsmörtel beziehungsweise Beton ("Estrich" genannt) oder Fliessestrichen oder Plattenkonstruktionen (Holz, etc.), als Tragschicht überdeckt. Der Unterbau unter diesen Tragschichten besteht daher hauptsächlich im Moment aus zwei separat zu verarbeitenden Teilen. Zuerst wird eine Schüttung beispielsweise aus Splitt (gebunden oder ungebunden) als Niveauausgleich eingebracht, dann werden Platten sehr aufwendig durch Zuschneiden verlegt. Um dies zu umgehen, wurden deshalb Anstrengungen gemacht, fugenlose Dämmstoffe auf Zementbasis und Schaumstoffgranulate zu entwickeln, die durch Wasser gehärtet werden. Da hierfür jedoch die Schaumstoffgranulate durch die Zementmatrix verfestigt werden müssen, weist ein solcher Dämmstoff, welcher lediglich auf einem Zementbindemittel aufgebaut ist, einen sehr hohen Zementgehalt und dadurch bedingt, neben einem hohen spezifischen Gewicht, eine sehr schlechte Wärme- und Trittschalldämmung auf. Üblicherweise sind hier Mindestbindemittelgehalte von 120 kg Zement pro m$^3$ notwendig, um ausreichende Tragkraft zu erreichen. Es wurde deshalb versucht den Zementgehalt zu reduzieren. So wurde in DE 3345550 A1 gefunden, dass der Zusatz von hydrolysierter Kieselsäure eine solche Reduktion des Zementes in einem Polystyrol enthaltenden Wärmedämmputz für die Aussenseite von Gebäuden erlaubt. EP 0 819 662 beschreibt einen Dämmstoff zur Wärme- und Trittschalldämmung eines Bodens, der neben einem Schaumstoffgranulat und einem zementösen Bindemittel einen Anteil von amorpher Kieselsäure von wenigstens 10 Gew.-%, bezogen auf den Zement, aufweist. Die Wirkungsweise wird hierbei durch die puzzolane Wirkung der eingesetzten Kieselsäure erklärt.

Diese mineralischen Bindemittel des Standes der Technik ermöglichen realistischerweise eine Reduktion des Bindemittelgehalts auf lediglich 60 kg und mehr pro m$^3$ Styroporgranulatschüttung. Diese Schüttungen - ausreichend tragfähig ausgeführt - sind relativ starr und weisen nach dem Erhärten eine dynamische Steifigkeit vor Begehung zwischen 40 und 60 MN/m$^3$ auf und zeigen daher nur eine mittlere Trittschallminderung. Im Gegensatz zu den hoch zementhaltigen Schüttungen (100 kg und mehr) brechen jedoch beim direkten Begehen vor der Applikation des Zementestrichs die zementösen Bindungen zwischen den Granulatkörnern teilweise und die Schüttung setzt sich und erweicht.

Für die Bestimmung der Dämmeigenschaften werden einerseits die Wärmeleitfähigkeit [W/mK] und andererseits die Trittschallminderung [dB], beziehungsweise, damit verbunden, die dynamische Steifigkeit [MN/m$^3$] ermittelt.

Gebundene Granulatschüttungen gemäss dem Stand der Technik weisen typischerweise Wärmeleitfähigkeiten von grösser 0.044 W/mK und dynamischen Steifigkeiten von ca. 20 MN/m$^3$ nach Belastung auf.

Wünschenswert sind daher Systeme, die mit deutlich verbesserter Bindekraft und verbessertem Rückstellverhalten gleichwertige oder bessere Wärme- und Trittschalleigenschaften aufweisen, und damit in der Anwendung deutlich sicherer sind.

**Darstellung der Erfindung**

Aufgabe der vorliegenden Erfindung war es Dämmstoffe auf Basis eines zementösen Bindemittels zu entwickeln, die einen möglichst geringen Anteil an Zement aufweisen und trotzdem nach Aushärtung mit Wasser eine grosse Eigenfestigkeit sowie exzellente Wärme- und Trittschalldämmung, insbesondere auch nach erfolgter mechanischer Belastung, aufweisen.

Es wurde gefunden, dass dies durch eine Dämmstoffzusammensetzung gemäss Anspruch 1 erreicht werden kann.

Überraschenderweise wurde gefunden, dass diese Verbesserung gegenüber dem Stand der Technik durch den kombinierten Einsatz der Inhaltsstoffe erreicht wird. Es hat sich gezeigt, dass die erfindungsgemässe ausgehärtete Dämmstoffzusammensetzung im Vergleich zum Stand der Technik bei gleichem Zementgehalt bedeutend höhere Festigkeit und gleichzeitig gute Dämmeigenschaften aufweist. Es können somit zementöse Dämmstoffe realisiert werden, die noch einen markant kleineren Anteil an Zement aufweisen und trotzdem gute mechanische Eigenschaften aufweisen, als dies mit den im Stand der Technik bekannten Systemen bekannt ist. Durch den geringeren Anteil und dem damit erhöhten Gehalt an Schaumstoffgranulat werden auch die Dämmeigenschaften markant verbessert.

Schliesslich bleiben bei Belastung eines solchen Dämmstoffes, wie sie zum Beispiel durch Begehen eines Estrichbodens erfolgen - trotz einem stark verringerten Zementanteil - die Bindekräfte innerhalb des Dämmstoffs bedeutend länger erhalten.

**Kurze Beschreibung der Zeichnungen**

Im folgenden werden anhand der Zeichnungen Ausführungsbeispiele der Erfindung näher erläutert. Gleiche Elemente sind in den verschiedenen Figuren mit den gleichen Bezugszeichen versehen.

Fig. 1     einen Estrichbodenaufbau im Querschnitt im Wandbereich
Fig. 2     einen Estrichbodenaufbau im Querschnitt mit Leitungen
Fig. 3     ein Messdiagramm eines Dämmstoffprobekörpers
Fig. 4     die Messanordnung für die Bestimmung der dynamischen Steifigkeit
Fig. 5     die schematische Messanordnung gemäss Fig.4

**Weg zur Ausführung der Erfindung**

Die vorliegende Erfindung betrifft eine Dämmstoffzusammensetzung zur Trittschall- und Wärmedämmung, umfassend ein polymeres geschlossenzelliges Schaumstoffgranulat, ein zementöses Bindemittel sowie mindestens ein Wasserrückhaltemittel. Der Gewichtsanteil der Summe aller Wasserrückhaltemittel liegt, bezogen auf den Zement zwischen 0.5 Gew.-% und 25 Gew.-% und das Verhältnis des Schaumstoffgranulats zu Zement zwischen 20 Gew.-% und 120 Gew.-%.

Die Dämmstoffzusammensetzung enthält ein zementöses Bindemittel, welches zumindest einen Zement, insbesondere mindestens einen Zement gemäss Euronorm EN 197, enthält. Bevorzugt sind Portlandzemente, Sulfoaluminatzemente und Tonerdeschmelzzemente, insbesondere Portlandzement. Mischungen von Zementen können zu besonders guten Eigenschaften führen. Besonders geeignet sind Mischungen von mindestens einem Portlandzement mit mindestens einem Sulfoaluminatzement oder mindestens einem Tonerdeschmelzzement. Für eine schnelle Aushärtung kommen vor allem zementöse Schnellbindemittel zum Einsatz, die vorzugsweise mindestens einen Tonerdeschmelzzement oder eine andere Aluminatquelle, wie beispielsweise aluminatspendende Klinker, und gegebenenfalls Calciumsulfat, in Form von Anhydrit, Halbhydrat- oder Dihydratgips; und/oder Calciumhydroxid enthalten.

Der Anteil des Zementes ist mit 100 kg/m$^3$ der mit Wasser angemachten Dämmstoffstoffzusammensetzung nach oben begrenzt.

Das zementöse Bindemittel kann weiterhin Bestandteile ausgewählt aus der Gruppe der Gipse und Calciumhydroxid enthalten.

Die Dämmstoffzusammensetzung enthält weiterhin ein polymeres geschlossenzelliges Schaumstoffgranulat. Dieses Schaumstoffgranulat weist vorzugsweise eine Schüttdichte zwischen 10 und 20 kg/m$^3$, insbesondere zwischen 12 und 18 kg/m$^3$ auf. Bevorzugt sind Polystyrolgranulate, insbesondere recyclierte Polystyrolgranulate.

Üblicherweise wird das Schaumstoffgranulat derart eingesetzt, dass das Verhältnis des Schaumstoffgranulats zu Zement zwischen 20 Gew.-% und 120 Gew.-% liegt. Bevorzugt liegt dieses Verhältnis zwischen 30 Gew.-% und 100 Gew.-%, insbesondere zwischen 30 Gew.-% und 75 Gew.-%. Besonders bevorzugt ist ein Verhältnis von 60 bis 75 Gew.-%.

Es versteht sich, dass es unter gewissen Umständen von Vorteil sein kann, mehrere verschiedene polymere geschlossenzellige Schaumstoffgranulate einzusetzen, sowohl in Bezug auf deren chemische Zusammensetzungen als auch in Bezug auf deren mittleren Partikeldurchmesser. Die eingesetzten Schaumstoffgranulate weisen stets eine gewisse Partikelgrössen-Verteilung auf. Üblicherweise liegt die Partikelgrösse zwischen 0 und 8 mm. Vorzugsweise ist der Anteil unter 1 mm geringer als 10 Gew.-% und der Anteil über 2 mm bei über 75 Gew.-%, da der Bindemittelbedarf durch kleinere Partikel zusätzlich erhöht wird.

Die Dämmstoffzusammensetzung enthält weiterhin mindestens ein Wasserrückhaltemittel. Ein "Wasserrückhaltemittel" wird in dieser gesamten Schrift wie folgt definiert:

Ein Wasserrückhaltemittel ist im Sinne dieses Patentes eine Substanz, welche nach einer modifizierten Wolf-II-Methode, wie im Folgenden erklärt, ein Wasserrückhaltevermögen aufweist:

- von mehr als 85 % für ein organisches Wasserrückhaltemittel bei einem Wasser/Zement-Verhältnis (="w/z") von 0.7
- von mehr als 33% für ein anorganisches Wasserrückhaltemittel bei einem w/z von 0.4
- von mehr als 85 % bei einem w/z von 0.7 für eine Mischung von organischen und anorganischen Wasserrückhaltemittel:

Es wird auf einer ebenen Glasplatte ein Zellulosefilterpapier (Schleicher & Schuell, D-37582 Dassel, Nr. 2294 Ø 11 cm), dann ein dünnes Zellulosevlies (Schleicher & Schuell, D-37582 Dassel, Nr. 0980/1 Ø 11 cm) aufgelegt und darauf ein Plastikring (Innendurchmesser 90 mm und Höhe 15 mm) gelegt.

Der Zementleim wird durch Mischen während 3 Minuten mit einem Kunststoffspatel von Zement (Milke Cem I 52.5 R Werk Geseke), Wasser, entsprechend einem gewichtsbezogenen Wasser/Zement-Verhältnis (="w/z") von 0.7, beziehungsweise 0.4, und der jeweils als Wasserrückhaltemittel zu testenden Substanz hergestellt und sogleich bündig mit der Oberkante in den Ring eingefüllt (Bedarf ca. 180g Zementleim). Die Dosierung der zu testenden Substanz muss für diesen Test zwischen 0.4 Gew.-% und 5 Gew.-% für ein organisches Wasserrückhaltemittel und zwischen 12 Gew.-% und 15 Gew.-% für ein anorganisches Wasserrückhaltemittel betragen. Für eine Mischung von anorganischen und organischen Wasserrückhaltemitteln beträgt für diesen Test die Dosierung zwischen 0.4 Gew.-% und 5 Gew.-% für das organische Wasserrückhaltemittel und zwischen 12 Gew.-% und 15 Gew.-% für das anorganisches Wasserrückhaltemittel.

Nach 3 Minuten Einwirkdauer ab Ringbefüllung wird die Wasserabgabe an das Zellulosefilterpapier durch Differenzwiegung desselben vor und nach der Wasseraufnahme ermittelt und jeweils auf 100g Zementleim rückgerechnet. Aus der so bestimmten Wasserabgabe $m_x$ für die als Wasserrückhaltemittel zu testende Substanz und $m_{ref}$ für den Nullversuch, d.h. Zement ohne Substanz, wird das Wasserrückhaltevermögen (*WRV*) nach der folgenden Formel bestimmt.

$$WRV = \frac{m_{ref} - m_x}{m_{ref}}$$

Das Wasserrückhaltemittel kann eine organische oder eine anorganische Verbindung sein. Anorganische Wasserrückhaltemittel lassen sich typischerweise bei den Mehrschichtsilikaten wie Bentonit, Smektit, Montomorillont, oder auch bei kalzinierten Kaolinen, insbesondere Metakaolin, finden. Als besonders geeignetes anorganisches Wasserrückhaltemittel hat sich Metakaolin erwiesen.

Organische Wasserrückhaltemittel lassen sind typischerweise bei Celluloseethern, Methylcellulosen, Hydroxypropylmethylcellulosen, Hydroxyethylcellulosen, Carboxymethylcellulosen, und weiteren Cellulosederivaten, Stärkeethern, Welan Gum oder synthethischen Verdickern wie Polyacrylsäure oder PU-Acrylaten finden. Als besonders geeignet haben sich Hydroxyalkylmethylcellulosen, insbesondere Hydroxypropylmethylcellulosen und Hydroxyethylmethylcellulosen gezeigt.

Der verwendete Gewichtsanteil der Summe aller Wasserrückhaltemittel hängt stark von den erwünschten Dämm- und mechanischen Eigenschaften der ausgehärteten Dämmstoffzusammensetzung sowie des verwendeten Wasserrückhaltemittels ab und bewegt sich typischerweise zwischen 0.1 und 25 Gew.-%, bezogen auf den Zement.

Anorganische Wasserrückhaltemittel werden vorteilhaft in einer Konzentration zwischen 0.2 und 25 Gew.-%, insbesondere zwischen 0.5 und 9 Gew.-%, bevorzugt zwischen 4 und 9 Gew.-%, bezogen auf den Zement eingesetzt. Organische Wasserrückhaltemittel werden vorteilhaft in einer Konzentration zwischen 0.1 und 9 Gew.-%, bevorzugt zwischen 0.5 und 5 Gew.-%, insbesondere zwischen 1 und 4 Gew.-%, bezogen auf den Zement eingesetzt.

Besonders bevorzugt werden organische Wasserrückhaltemittel.

Gegebenenfalls weist die Dämmstoffzusammensetzung zusätzlich noch mindestens einen Füllstoff auf, welcher kein geschlossenzelliges Schaumstoffgranulat, kein zementöses Bindemittel und kein Wasserrückhaltemittel ist und dessen mittlere Teilchengrösse so gewählt ist, dass das Verhältnis mittlere Teilchengrösse des Füllstoffs zu mittlere Teilchengrösse des geschlossenzelligen Schaumstoffgranulates kleiner 1, besonders zwischen 0.01 und 0.5, insbesondere zwischen 0.02 und 0.25 ist.

Solche Füllstoffe können elastisch oder starr sein. Bevorzugt sind jedoch elastische Füllstoffe. Als starre Füllstoffe kommen beispielsweise Glaskugeln, Glashohlkugeln, Blähglaskugeln, Sand, Quarzmehl in Betracht.

Als elastische Füllstoffe kommen insbesondere Gummi oder Kautschuk, bevorzugt in Granulat- oder Pulverform, in Betracht.

Der Einsatz dieser Füllstoffe ist speziell dann vorteilhaft, wenn ein Dämmstoff mit geringem Anteil an zementösem Bindemittel, typischerweise im Bereich von zwischen 20 und 45 kg pro m$^3$ der Zusammensetzung, erzielt werden soll.

Im Falle von grösseren Anteilen an zementösen Bindemitteln, typischerweise einem Bindemittelanteil von mehr als 35 kg pro m$^3$ der Zusammensetzung, kann die Dämmstoffzusammensetzung spezielle Feststoffpartikel enthalten, wie zum Beispiel Glimmerplättchen, recycliertes Altreifengranulat, wasseraufnehmende Kunststoff-Fasern, hydrophobe Kunststoffpartikel, wie beispielsweise Fetzen von Polyethylen- oder Polypropylenfolien. Durch diese Partikel können beabsichtigt Sollbruchstellen in das Dämmmaterial eingebracht werden, was zu geringeren dynamischen Steifigkeiten, bis zu 5 MN/m$^3$, und damit zu besseren Dämmeigenschaften, verglichen mit denselben Zusammensetzungen ohne diese Feststoffpartikel, führt, ohne dass die mechanische Belastbarkeit allzu stark verringert wird. Die Partikelgrösse ist sehr stark abhängig von der individuellen Zusammensetzung beziehungsweise den Produktanforderungen und muss im Einzelfall durch den Fachmann im Rahmen seines Wissens bestimmt, beziehungsweise optimiert, werden.

Die Dämmstoffzusammensetzung kann des weiteren noch andere Bestandteile enthalten. Solche Bestandteile sind beispielsweise Pigmente, Flammschutzmittel, UV-Stabilisatoren, Komplexbildner, Erhärtungs- und/oder Abbinde-Beschleuniger, Filmbildehilfsmittel, Erhärtungs- und/oder Abbinde-Verzögerer, Korrosionsinhibitoren, Hydrophobierungsmittel, Luftporenbildner, Entschäumer, Farbstoffe, Tenside, Dispersionskunststoffe, Geruchsstoffe oder Biozide.

Der Einsatz von mindestens einem Dispersionskunststoff, d.h. ein organisches Copolymer, welches in einer wässrigen Dispersion oder als redispergierbares Pulver - beispielsweise erhalten durch eine Sprühtrocknung einer Dispersion- welche dem Fachmann auch als Kunststoffdispersionspulver bekannt sind, kann zu besonders vorteilhaften Eigenschaften führen.

Es hat sich gezeigt, dass Fliessmittel, wie sie bekannt sind aus der Betontechnologie, nicht geeignet sind als Zusatz zur erfindungsgemässen Dämmstoffzusammensetzung, da sie das Rückhaltevermögen der, speziell anorganischen, Rückhaltemittel offenbar verringern, was sich darin zeigt, dass ein grösserer Anteil des zementösen Bindemittels nötig wird, um eine vergleichbare Festigkeit wie ohne den Zusatz von Fliessmittel zu erreichen.

Es kann unter Umständen weiterhin von Vorteil sein, dass die Dämmstoffzusammensetzung frei von amorpher Kieselsäure ist.

Der Fachmann kann sein Fachwissen über Granulometrie heranziehen, um die Dämmstoffzusammensetzung auf die Teilchengrösse der einzelnen Bestandteile hin zu optimieren.

Es hat sich gezeigt, dass sich durch den Zusatz eines Wasserrückhaltemittel zum zementösen Bindemittel und dem geschlossenzelligen polymeren Schaumstoffgranulat Dämmstoffe mit einem wesentlich kleineren Anteil an Zement als sie aus dem Stand der Technik bekannt sind, realisieren lassen, welche gute mechanische Festigkeiten aufweisen.

Ein Dämmstoff basierend auf der Technologie des Standes der Technik weist -insbesondere bei tieferem Zementanteil- einen bedeutend schlechteren Verbund im ausgehärteten Dämmstoff auf, das heisst, dass bei dessen Belastungen, wie sie beispielsweise durch ein Begehen entstehen, die Bindungen zwischen den Granulatpartikeln brechen und in grossem Ausmass Schaumstoffgranulat-Partikel ausbrechen, und demzufolge der Dämmstoff "zerkrümmelt".

Die vorteilhafte Wirkung des Wasserrückhaltemittels wird dadurch erklärt, dass in den Dämmstoffen des Standes der Technik das eingesetzte Wasser, welches für die hydraulische Aushärtung des Zementes benötigt wird, durch den Schaumstoff üblicherweise in beträchtlichem Umfang aufgenommen wird, so dass an deren Oberfläche die Zementaushärtung gestört ist, und deshalb an der Schaumstoffoberfläche kein richtiger Verbund entsteht. Dies ist umso ausgeprägter je kleiner der Anteil des Zementes bezogen auf den Schaumstoff und je geringer die Anmachwassermenge ist. Durch den Einsatz von Wasserrückhaltemitteln wird dies verhindert und der Zement bildet nach der Aushärtung mit der Schaumstoffoberfläche einen ausgezeichneten Verbund, auch wenn der Anteil des Zementes im Vergleich zum Schaumstoff klein ist. Es konnte gezeigt werden, dass dadurch dass anstelle von Wasserrückhaltemittel lediglich mehr Wasser eingesetzt wird, das heisst, indem der w/z erhöht wird, das Problem nicht zufriedenstellend gelöst werden kann, weil dadurch die Aushärtung massiv verzögert wird und zu schlechten mechanischen Eigenschaften führt.

Es können Dämmstoffzusammensetzungen formuliert werden, die einen sehr schnellen Festigkeitsaufbau und Trocknungszeiten aufweisen, so dass beispielsweise eine daraus gefertigte Dämmschüttung bereits nach einem bis zwei Tagen begangen werden kann. Speziell in diesen Fällen kommen die bereits erwähnten zementösen Schnellbinder zum Einsatz.

Um möglichst gute Dämmeigenschaften zu erreichen, ist, wie bereits erwähnt wurde, generell darauf hin zu arbeiten, möglichst wenig zementöses Bindemittel, beziehungsweise möglichst viel Schaumstoffgranulat einzusetzen. Andererseits muss gewährleistet werden, dass ein Verbund zwischen den einzelnen Schaumstoffgranulat-Partikeln für die Gewährung der mechanischen Belastung des Dämmstoffes vorhanden ist.

Durch die Reduktion des zementösen Bindemittels muss auch das Wasser für die Wasser-Zementreduktion stark reduziert werden. Damit wird die Verarbeitung sehr schwierig, insbesondere unter Berücksichtigung, dass viele Schaumstoffgranulate selber Wasser aufnehmen, im Falle von Polystyrol sind dies typischerweise 70 - 90 Liter Wasser pro $m^3$ Granulat. Somit ist bei erwünscht tiefen Gehalten an Zement, wie beispielsweise 20 - 40 kg pro $m^3$ der Dämmstoffzusammensetzung, eine praxisgerechte Verarbeitung selbst unter starker Abweichung von den betontechnologisch üblichen Wasser/Zement-Verhältnissen nicht mehr möglich.

Durch den Einsatz von Wasserrückhaltemittel wird es nun ermöglicht, selbst bei sehr geringen Anteilen an Wasser noch genügend gute Verarbeitung als auch gute Festigkeiten zu erreichen. So wird erreicht, dass mit Wasser/Zement- Faktoren von etwa 1.0 bis etwa 2.0 Dämmstoffzusammensetzungen mit sehr guter Verarbeitung und Festigkeiten erhalten werden.

Weiterhin wird durch die Reduktion des Zementanteils die Menge des Zementleims, welcher die Schaumstoffgranulatpartikel verfestigt, derart verringert, dass die Schichten des Zementleimes sehr dünn werden und demzufolge der Verbund relativ spröde wird. Überraschenderweise wurde gefunden, dass bei gleichem Zementanteil die erfindungsgemässen Dämmstoffe auch nach Belastung eine markante Verbesserung gegenüber den jeweiligen Systemen gemäss dem Stand der Technik aufweisen.

Die Dämmstoffzusammensetzung kommt mit Wasser vermischt zum Einsatz. Die Menge des eingesetzten Wassers hängt stark von der Zementmenge ab. Das Wasser/Zement- Verhältnis kann jedoch abweichen von demjenigen, welches der Zement- beziehungsweise Betontechnologe üblicherweise anwendet. Das Wasser/Zement- Verhältnis liegt typischerweise im Bereich von 0.7 bis 3, insbesondere im Bereich von 0.7 bis 2.5, bevorzugt im Bereich von 1.1 bis 2.5.

Die Dämmstoffzusammensetzung kann unmittelbar vor Anwendung aus den einzelnen Bestandteilen oder Halbfabrikaten hergestellt werden oder sie kann industriell gefertigt und/oder vermischt an den Ort der Applikation transportiert werden.

Das Wasser wird unmittelbar vor der Applikation zur Dämmstoffzusammensetzung oder beim Mischen der einzelnen Komponenten davon zugemischt.

Hierfür sind unterschiedliche Varianten der Herstellung geeignet.

In einer ersten Variante wird das zementöse Bindemittel mit dem Wasserrückhaltemittel zusammen mit dem Grossteil, typischerweise etwa 90%, des Schaumstoffgranulates vermischt. Hierzu werden anschliessend zuerst das Wasser, dann der Dispersionskunststoff und anschliessend der Rest des Schaumstoffgranulates zugemischt. Falls eine Kunststoffdispersion verwendet wird, kann diese vorab mit dem Wasser vermischt und somit gleichzeitig mit dem Wasser zugefügt werden. Wird ein Kunststoffdispersionspulver eingesetzt, so kann dieses auch vor der Wasserzugabe mit dem zementösen Bindemittel, dem Wasserrückhaltemittel und dem Schaumstoffgranulat vermischt werden. Es kann sich als vorteilhaft erweisen, wenn das Wasser und die Kunststoffdispersion nicht auf einen Schlag sondern portionenweise unter Rühren zugegeben werden.

Eine weitere Variante der Herstellung besteht darin, dass das Schaumstoffgranulat vorgelegt wird, dann das Wasser, hierauf das Wasserrückhaltemittel, dann das zementöse Bindemittel und anschliessend der Dispersionskunststoff, gegebenenfalls in Form einer Dispersion zugemischt wird.

In einer bevorzugten Variante der Herstellung wird das zementöse Bindemittel mit dem Wasserrückhaltemittel sowie dem Dispersionskunststoff vorgemischt, sodann wird das Bindemittel mit dem Wasser angemischt und schliesslich wird das Schaumstoffgranulat beigemischt. Es kann sich auch hier als vorteilhaft erweisen, wenn die Komponenten nicht auf einen Schlag, sondern portionenweise unter Rühren zugegeben werden.

Eine weitere bevorzugte Variante der Herstellung besteht darin, dass zuerst das zementöse Bindemittel, mit den Wasserrückhaltemitteln gemischt werden, ein Teil des Wassers und anschliessend diese Vormischung dem Schaumstoffgranulat in zumindest zwei Stufen unter dosierter Zugabe des Wassers zugemischt wird. Das Mischgefäss wird zunächst mit etwa drei Viertel der Gesamtmenge des Schaumstoffgranulates beschickt, bevor der vorgemischte Bindemittelanteil mit dem dosierten Anmachwasser zugegeben wird. Anschliessend, oder mit dem Anmachwasser gemischt, wird der Dispersionskunststoff beigefügt. Das restliche Schaumstoffgranulat wird dann während des Mischvorganges eingefüllt.

Eine weitere Ausführungsform der Herstellung besteht darin, dass das Schaumstoffgranulat mit dem zementösen Bindemittel, Wasserrückhaltemitteln und dem Dispersionskunststoff gemischt werden, und anschliessend das Wassers zugemischt wird.

Bei allen beschriebenen Herstellvarianten wird der Mischvorgang vorteilhaft in einem für eine Druckluftförderung des Mischgutes ausgelegten Mischkessel durchgeführt. Nach dem Mischvorgang, kann die jeweilige angemachte Mischung dann mit Hilfe von Druckluft ausgefördert und über eine Schlauchleitung zum Einbringungsort transportiert werden.

Eine weitere Möglichkeit der Herstellung besteht auch darin, dass die einzelnen Komponenten im richtigen Verhältnis kontinuierlich dosiert und in einer kurzen Mischstrecke kontinuierlich gemischt und gefördert werden.

Zur Wärmedämmung wird die Dämmstoffzusammensetzung zwischen zwei Materialien unterschiedlicher Temperatur angebracht und hat die Funktion, zwischen diesen den Wärmeenergietransfer zu verhindern. Es ist klar, dass deshalb diese Dämmstoffzusammensetzung einerseits zur Wärmeisolation oder aber auch zur Kälteisolation verwendet werden kann. Zur Trittschalldämmung ist es wichtig, die Fläche, welche typischerweise im wesentlichen horizontal angeordnet ist, auf welcher die Schritte erfolgen, oder einer damit direkt verbundenen Struktur von der restlichen Gebäudestruktur durch Anbringen einer Dämmstoffzusammensetzung dazwischen voneinander akustisch abzukoppeln. Die beschriebenen Dämmstoffzusammensetzungen weisen bereits in geringen Schichtdicken von wenigen Zentimetern exzellente Dämmeigenschaften auf.

Die Dämmstoffzusammensetzung findet insbesondere in der Herstellung von Estrichboden Verwendung. Daneben kann sie jedoch auch als Verfüllung von Hohlräumen, welche durch im wesentlichen vertikal angeordneten Flächen begrenzt sind, verwendet werden. Ein Bespiel für eine solche Anwendung ist die Isolation zwischen zwei Mauern.

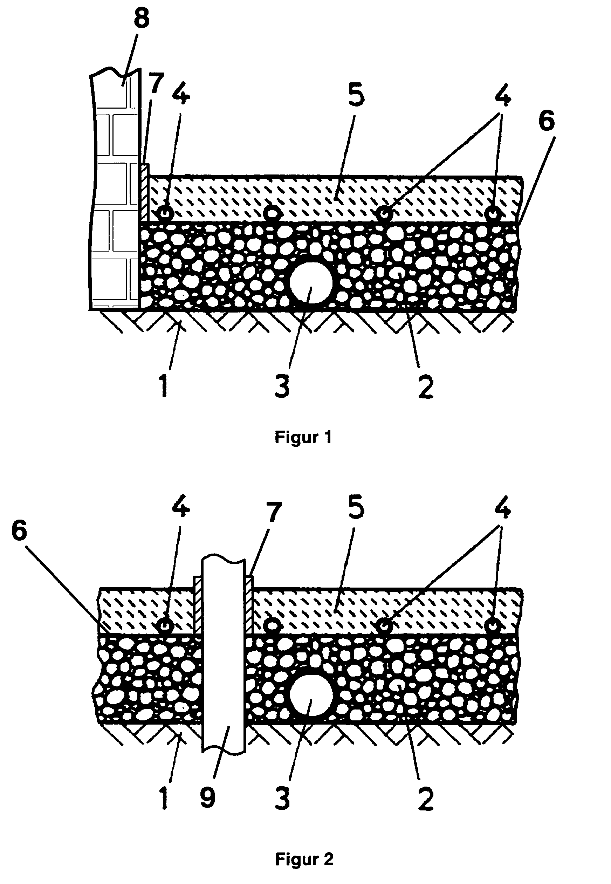

Ein Estrichbodenaufbau erfolgt typischerweise wie in Figur 1 und Figur 2 schematisch dargestellt. Auf den Boden 1 des Bauwerks wird die mit Wasser vermischte Dämmstoffzusammensetzung 2 in einer üblichen Schichtdicke zwischen 7 und 10 cm aufgebracht. In dieser Schicht sind gegebenenfalls Installationsrohre 3 vorhanden. Falls solche Rohre vorhanden sind, ist darauf zu achten, dass sie gut durch die Dämmstoffzusammensetzung 2 umhüllt werden, so dass sich keine Brücken für Schall- oder Wärmeenergie bilden können. Frühestens sobald die Dämmstoffzusammensetzung genügend Festigkeit aufgebaut hat, so dass sie begehbar ist, kann gegebenenfalls eine dünne Trennfolie 6, üblicherweise aus Polyethylen, und gegebenenfalls Fussbodenheizungsrohre 4 verlegt werden. Anschliessend wird ein Zementestrich 5 aufgebracht. Um eine gute Wärme- und Trittschalldämmung zu erreichen, ist darauf zu achten, dass der ein Zementestrich 5 oder darauf angebrachte Deckbelege stets durch weitere Dämmmaterialien 7 wie Schaumstoffstreifen durch die Dämmschicht 2 durchlaufende Rohre oder Leitungen 9 genügend abgedämmt ist. Eine solche Trennungsschicht mit Dämmeigenschaften ist vorteilhaft ebenfalls im Wandbereich zwischen Wand 8, typischerweise aus Beton oder Backstein gefertigt, und ein Zementestrich 5 anzubringen.

Die Dämmschicht hat neben der Dämmfunktion gleichzeitig noch die Funktion einer Ausgleichsschicht zum Ausgleichen von Bodenunebenheiten und erleichtert den Einbau von Leitungs- und Installationsrohren. Dies ist besonders wichtig in Renovationsarbeiten, wo für das Einlegen der Leitungen und Rohre der aufwendige und - insbesondere bei einem Betonboden mühsame Arbeitsschritt des Aufspitzens oder Einfräsens entlang des Bodens wegfällt. Zudem ist es durch das stark reduzierte Gewicht, im Vergleich zu einem konventionellen Ausgleichsboden, möglich auch Böden mit kleiner Tragkraftreserve effizient abzudämmen.

Die erfindungsgemässe Dämmstoffzusammensetzung erhärtet mit Wasser zu einer Masse, bei der die Schaumstoffgranulate durch die Zementmatrix miteinander verbunden sind. Die Schichtdicke des Zementes ist klein und beträgt typischerweise weniger als 0.1 mm.

Es ist selbstverständlich auch möglich, durch den Einsatz von mehr zementösem Bindemittel, und damit weniger Schaumstoffgranulat, die Festigkeit der Dämmstoffzusammensetzung zu erhöhen, wodurch allerdings bei markanter Erhöhung die guten Dämmeigenschaften weitgehend verloren gehen. In Fällen, wo die Dämmeigenschaften nicht von primärem Interesse ist oder gar nicht notwendig ist, kann eine solche Zusammensetzung durchaus interessante Anwendungen haben. So liesse sich beispielsweise das Gewicht eines Bodens für höhere Belastungen markant reduzieren, ohne dass starke Einbussen an der Festigkeit zu erwarten sind.

Für den Einsatz als Dämmstoff ist jedoch ein möglichst grosser Schaumstoffgranulatanteil wie von der Eigenfestigkeit der ausgehärteten Dämmstoffzusammensetzung her noch akzeptierbar anzustreben. Durch die vorliegende Erfindung ist es möglich, den Schaumstoffgranulatanteil bis auf 120 Gew.-% bezogen auf den Zement zu steigern. Aufgrund der Konsistenz der mit Wasser vermischten Dämmstoffzusammensetzung ist einerseits das Egalisieren der Oberfläche vereinfacht und andererseits ein Anbringen auf einer geneigten Fläche ermöglicht. So ist beispielsweise mit der selben Dämmstoffzusammensetzung möglich ein Flachdach, aber auch ein Steildach abzudämmen.

Es wird ermöglicht mit geringem Aufwand eine fugenlose, und damit einwandfrei dämmende, Wärme- und Trittschall-Dämmschicht auch in grossen Schichtstärken zu erstellen, welche nach kurzer Zeit bereits belastbar, beispielsweise begehbar, ist.

Die erfindungsgemässe Dämmstoffzusammensetzung verfügt nach Aushärtung mit Wasser über erstaunlich gute Wärme- und Trittschalldämmungseigenschaften. Es können Wärmedämmeigenschaften bis unter 0.045 W/mK erreicht werden. Es können dynamische Steifigkeiten von unter 20 MN/m$^3$, insbesondere tiefer als 10 MN/m$^3$ erreicht werden. Solche Werte führen erfahrungsgemäss zu einer Trittschallminderung von mehr als 30 dB.

Die Dämmstoffe sind nach kurzer Zeit bereits belastbar. Typsicherweise ist der Festigkeitsaufbau mit zementösen Schnellbindemitteln derart, dass sie bereits nach einem bis zwei Tagen begehbar sind.

Die ausgehärteten Dämmstoffe zeichnen sich wesentlich dadurch aus, dass sie bei einer mechanischen Belastung weniger zerstört werden, beziehungsweise nicht stark komprimiert bleiben, sondern ein hohes Rückstellverhalten aufweisen. Dadurch wird gewährleistet, dass die dynamische Steifigkeit und damit die Trittschalldämmung nach einer mechanischen Belastung im wesentlichen unverändert erhalten bleibt. Diese Aussage gilt entsprechend auch für die Wärmedämmung.

Es ist klar, dass dieses Rückstellverhalten durch die Geschwindigkeit und das Ausmass der mechanischen Belastung beeinflusst wird. Durch Variation der Bestandteile der Dämmstoffzusammensetzung wird das Rückstellverhalten deshalb vorzugsweise für die Bereiche der Belastungen optimiert, wie sie beim Verlegen eines Estrichbodens auftreten.

**Beispiele**

Die folgenden Beispiele illustrieren die vorliegende Erfindung.

**Verwendete Rohstoffe**

Tabelle 1.

| Eingesetzten Rohstoffe. | | | |
|---|---|---|---|
| Kommerzieller Name | Lieferant | Art | Abkürzung |
| Culminal C8315 | Hercules GmbH; Aqualon Division, Deutschland | Methyl-Hydroxyethyl-Cellulose | |
| Milke Cem I 52.5 R | Milke, Werk Geseke, Deutschland | Portlandzement | 'CEM' |
| Metastar 501 | Imerys England | Metakaolin | 'A-WRHM' |
| Methocel 228 | Dow Deutschland | Hydroxypropylmethylcellulose | 'O-WRHM' |
| Methocel 267 | Dow Deutschland | Hydroxyethylmethylcellulose | 'O-WRHM' |
| Vinnapas LL 5044 N | Wacker Polymer Systems, Deutschland | Vinylacetat-Ethylen-Copolymer Pulverdispersion | 'DispKun' |
| Welan Gum | Kelco International, Grossbritanien | Wasserlösliches Polysaccharid aus Fermentationsprozess gewonnen | |

**Wasserrückhaltemittel**

Die Substanzen in Tabelle 2 wurden, wie beschrieben, bei einem w/z-Verhältnis von 0.7 bzw. 0.4 auf das Wasserrückhaltevermögen hin mittels modifizierter Wolf-II-Methode untersucht.

Tabelle 2.

| Wasserrückhaltemittel. | | | |
|---|---|---|---|
| **Substanz** | **Konzentration** | *WRV* | **w/z** |
| Metastar 501 | 8 Gew.-% | 22% | 0.4 |
| Metastar 501 | 13 Gew.-% | 39% | 0.4 |
| | | | |
| Culminal C8315 | 0.7 Gew.-% | 95% | 0.7 |
| Culminal C8315 | 1.0 Gew.-% | 99% | 0.7 |
| | | | |
| Methocell 228 | 0.2 Gew.-% | 41% | 0.7 |
| Methocell 228 | 0.7 Gew.-% | 93% | 0.7 |
| Methocell 228 | 1.0 Gew.-% | 98% | 0.7 |
| Methocell 228 | 2.0 Gew.-% | 99% | 0.7 |
| | | | |
| Methocell 267 | 0.2 Gew.-% | 75% | 0.7 |
| Methocell 267 | 0.7 Gew.-% | 99% | 0.7 |
| | | | |
| Welan Gum | 0.75 Gew.-% | 92% | 0.7 |

**Dämmstoffzusammensetzung- und Probekörper-Herstellung**

Zur Herstellung der Probekörper wurde als Basisbindemittel ein sehr frühhochfester Portlandzement (Milke Cem I 52.5 R aus dem Werk Geseke) verwendet.

Es wurden die erfindungsgemässen (*B1, B2, B3*) sowie Vergleichs-(*Ref.1* und *Ref. 2*) Zusammensetzungen gemäss Tabelle 3 hergestellt. Die dort angegebenen Mengen der mit Wasser vermischten Dämmstoffzusammensetzungen beziehen sich auf kg/m$^3$ der unausgehärteten Nassmischung.

Die Mischungen wurden in einem 10L-Hobart-Mischer wie folgt hergestellt. Recyclat-Polystyropolgranulat (0-8 mm; Schüttdichte 15 kg/m$^3$) und das zementöse Bindemittel mit allenfalls Wasserrückhaltemittel wurde vorgelegt und anschliessend das Wasser während dem Mischen zugeben. Die Mischung wurde 5 Minuten gemischt, 10 Minuten ruhen gelassen und dann unter leichter Verdichtung in 20 x 20 x 8cm Formen gefüllt. Alle Proben wurden leicht verdichtet, entsprechend 15 kg Polystyroporgranulat je m$^3$ Schüttung. Es wurden jeweils 3 Probekörper obiger Abmessungen hergestellt und 28 Tage erhärten gelassen.

Das Referenzbeispiel *Ref. 2* wies nach der Herstellung eine derart schlechte Festigkeit aus, dass der Probekörper bereits beim Herausnehmen aus der Form zu einem wesentlichen Teil zerbröselte und deshalb nicht den Messungen unterzogen werden konnte.

Tabelle 3.

| Dämmstoffzusammensetzungen mit Wasser vermischt. | | | | | |
|---|---|---|---|---|---|
| | *Ref.1* | *B1* | *B2* | *Ref.2* | *B3* |
| Cem | 59.05 | 54.33 | 58.63 | 21.46 | 21.45 |
| Metastar 501 | | 4.72 | | | |
| Methocel 228 | | | 0.42 | | 0.64 |
| Wasser | 59.05 | 59.05 | 59.05 | 42.92 | 42.9 |
| Polystyrol | 15 | 15 | 15 | 15 | 15 |
| Total | 133.1 | 133.1 | 133.1 | 79.38 | 79.99 |
| | | | | | |
| w/z | 1.0 | 1.1 | 1.0 | 2.0 | 2.0 |
| Polystyrol [%]* | 11% | 11% | 11% | 19% | 18.8% |
| Cem [%]* | 44% | 41% | 44% | 27% | 27% |
| A-WRHM [%]* | | 3.5% | | | |
| O-WRHM [%]* | | | 0.3% | | 0.8% |
| | | | | | |
| A-WRHM/Cem | | 8.7% | | | |
| O-WRHM/Cem | | | 0.7% | | 3.0% |
| Polystyrol/Cem | 25.4% | 27.6% | 25.6% | 69.9% | 69.9% |

\* bezogen auf Zusammensetzung=100%.

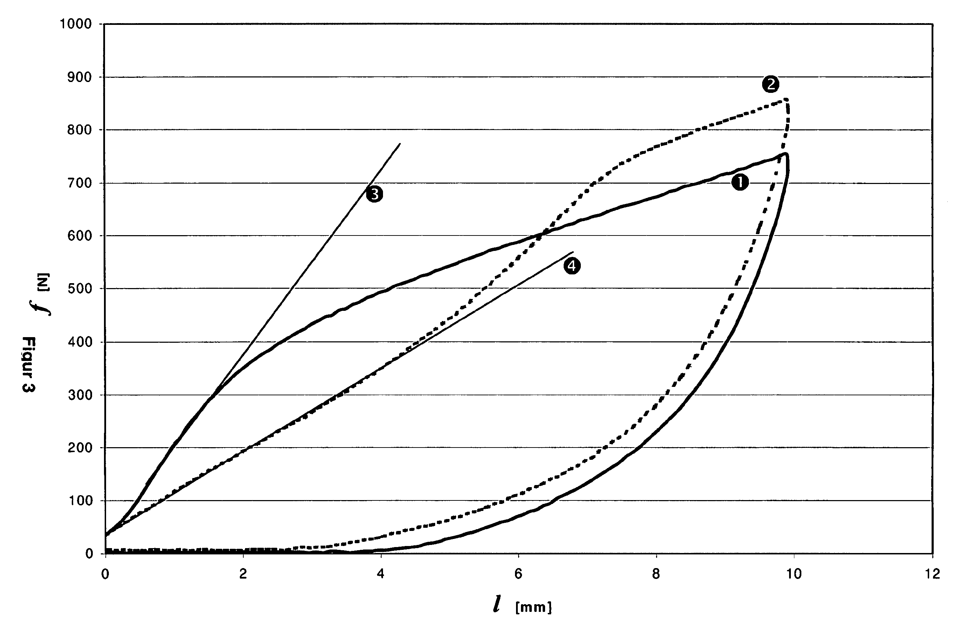

An jeweils zwei der 8 cm dicken Probekörper (20 x 20 cm Querschnitt) der jeweiligen Dämmstoff-Zusammensetzungen aus Tabelle 3 wurden Druck-E-Moduli gemessen, wobei in einer servohydraulischen Druckprüfmaschine linear mit einem Vorschub von 1 mm/sek. bis zu einer Stauchung von 10mm mittels Druckplatte belastet, anschliessend entlastet, die Reststauchung gemessen und neuerlich mit einem Vorschub von 1 mm/sek. bis auf 10 mm belastet wurde. Die notwendige Kraft wurde in Abhängigkeit der Einfederung aufgezeichnet. Im linearen Bereich der Stauchung Kraft(*f*)-Weg(*l*)-Diagramm wurde der E-Modul [N/mm$^2$] aus der Steigung der an die Kurve angelegten Ausgleichsgerade durch Multiplikation mit der Dicke (80mm) und Division durch die Fläche (200mm*200mm) des Probekörpers bestimmt, wie dies im Messdiagramm in Figur 3 für *B3* beispielsweise dargelegt wird. So wurden die erste Ausgleichsgerade (**③**') für die erste Stauchung (**①**') und die zweite Ausgleichsgerade (**④**') für die zweite Stauchung (**②**) ermittelt. In diesem Kraft(*f*)-Weg(*l*)-Diagramm ist die erste Stauchung mit (**①**') und die zweite Stauchung mit (**②**') bezeichnet. Zum besseren Vergleich wurde in Tabelle 4 auch die prozentuale Zunahme bezogen auf die jeweilige Referenz, die weder Wasserrückhaltemittel noch Dispersionskunstoff enthält, angegeben.

Des weiteren wurde die maximale Kraft (bei 10 mm (= 12.5 %) Stauchung bestimmt und daraus in eine Belastung in kg/m$^2$ umgerechnet.

Alle Resultate sind die Mittelwerte der zwei Messungen.

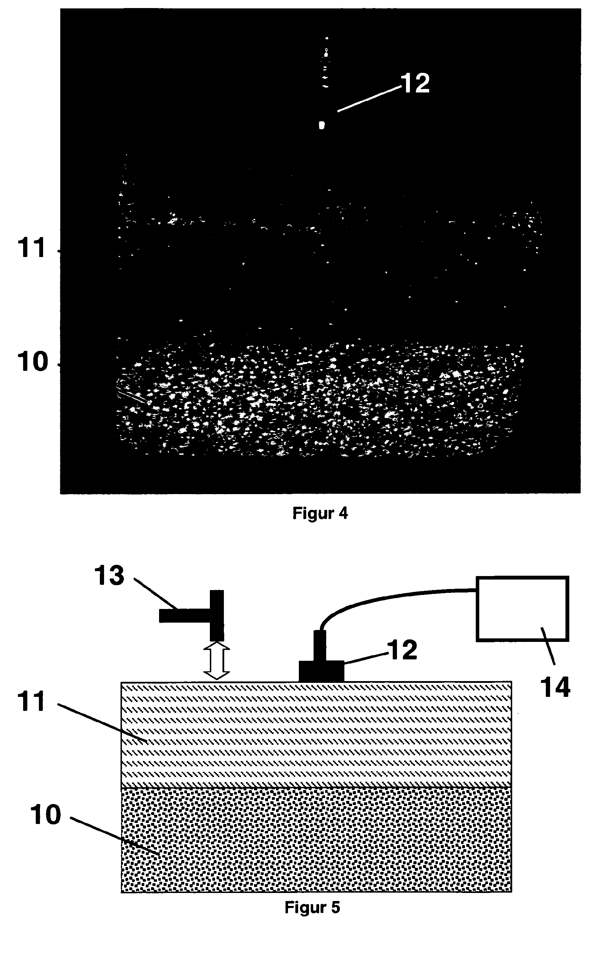

Die dritte Probe 10 jeder Zusammensetzung aus Tabelle 3 wurde mit 8 cm Estrich 11 beschichtet und nach 28 Tagen die dynamische Steifigkeit vor und nach 5 mm Stauchung mittels Ausschwingversuch über Ermittlung der Eigenfrequenz der Probe bestimmt. Die Messanordnung ist hierfür in Figur 4 und Fig. 5 abgebildet. Auf die Estrichschicht 11 wurde der Beschleunigungsaufnehmer "PSB 302B03" 12 aufgesetzt. Durch einen leichten Stoß mit einem Impulshammer 13 wurden nun Schwingungen in den Dämmstoff induziert, welche mit dem Beschleunigungsaufnehmer detektiert und in dem FFT-Analysator "AND AD-3524 FFT Analyzer" 14 weiterverarbeitet wurden. Dadurch war es möglich, die Eigenfrequenz des Dämmstoffes zu bestimmen, aus der sich die dynamische Steifigkeit $C_d$ [MN/m³] wie folgt errechnet:

$$C_d = \frac{(2\pi f)^2 \, m}{A}$$

mit

$f$ = gemessene Eigenfrequenz in Hz
$m$ = schwingende Masse (Estrich)
$A$ = Auflagefläche der Proben

Die Versuche **Ref. 1, B1** und **B2** in Tabelle 4. mit einem Polystyrol/Zement- Verhältnis von annähernd 25 Gew.-%, beziehungsweise einem Zementgehalt zwischen 54 - 59 kg/m³ zeigen, dass die durch ein Wasserrückhaltemittel -Metakaolin (**B1**) bzw. Celluloseether (**B2**) - modifizierten Proben deutliche Steigerungen der E-Moduli bzw. der Druckfestigkeit gegenüber reinem Zement **Ref.** aufweisen. Infolge der derart hohen Festig-

| | *Ref. 1* | *B1* | *B2* | *Ref. 2* | *B3* |
|---|---|---|---|---|---|
| **Druckmodul** | | | | | |
| Stauchung 1 [N/mm²] | 0.784 | 0.917 | 1.149 | n.b.** | 0.341 |
| Stauchung 2 [N/mm²] | 0.375 | 0.479 | 0.521 | n.b.** | 0.157 |
| Zunahme 1 [%]* | 0 | 17.0 | 46.6 | n.b.** | |
| Zunahme 2 [%]* | 0 | 27.7 | 38.9 | n.b.** | |
| | | | | | |
| **Belastung bei 10 mm Stauchung** | | | | | |
| Stauchung 1 [kg/m³] | 4179 | 4740 | 5352 | n.b.** | 1874 |
| Stauchung 2 [kg/m³] | 4871 | 5568 | 6481 | n.b.** | 2148 |
| Zunahme 1 [%]* | 0 | 13.4 | 28.1 | n.b.** | |
| Zunahme 2 [%]* | 0 | 14.3 | 33.1 | n.b.** | |
| | | | | | |
| **Dyn. Steifigkeit [MN/m³]** | | | | | |
| Unbelastet | 33.2 | 50.1 | 51.8 | n.b.** | 12.8 |
| Belastet | 14.7 | 13.4 | 20.4 | n.b.** | 5.6 |

Tabelle 4. Messergebnisse von Dämmstoffzusammensetzungen.
* bezogen auf **Ref.1**.  ** nicht bestimmbar

keitswerte, wie sie von **B1** und **B2** erreicht werden, lässt eine weitere Reduktion des Zementes, respektive eine Erhöhung Polystyrol/Zement-Verhältnisses zu, so dass die Dämmeigenschaften stark verbessert werden, und die Festigkeitswerte in Rahmen eines Systems des Standes der Technik liegt. So zeigen die Versuche **Ref. 2** und **B3**

mit einem Polystyrol/Zement- Verhältnis von annähernd 70 Gew.-%, beziehungsweise einem Zementgehalt von etwa 21.5 Gew.-% - zumal wie bereits erwähnt, der Nullvergleich **Ref. 2** nicht gemessen werden konnte -, dass mittels Zusatz von Wasserrückhaltemittel eine deutliche Steigerung der Festigkeiten, sprich E-Modul und Druckfestigkeit, realisiert werden kann. Das Beispiel **B3** weist aufgrund der dynamischen Steifigkeit exzellente Dämmeigenschaften auf. Es sind somit mit den erfindungsgemässen Zusammensetzungen mechanisch belastbare Dämmstoffe erhältlich, die ein äusserst hohes Polystyrol/Zement- Verhältnis, und damit äusserst hohe Dämmeigenschaften aufweisen, wie sie mit den dem Stand der Technik entsprechenden zementösen Systemen nicht erreichbar sind.

**Patentansprüche**

1. Dämmstoffzusammensetzung zur Trittschall- und Wärmedämmung, umfassend ein polymeres geschlossenzelliges Schaumstoffgranulat und ein zementöses Bindemittel, **dadurch gekennzeichnet, dass** die Dämmstoffzusammensetzung ein Wasserrückhaltemittel umfasst, und dass der Gewichtsanteil der Summe aller Wasserrückhaltemittel, bezogen auf den Zement zwischen 0.1 Gew.-% und 25 Gew.-% und das Verhältnis des Schaumstoffgranulats zu Zement zwischen 20 Gew.-% und 120 Gew.-% liegt.

2. Dämmstoffzusammensetzung gemäss Anspruch 1, **dadurch gekennzeichnet, dass** das Wasserrückhaltemittel eine organische Verbindung ist und dass der Gewichtsanteil der Summe aller organischen Wasserrückhaltemittel zwischen 0.1 und 9 Gew.-%, insbesondere zwischen 0.5 und 5 Gew.-%, besonders zwischen 1 und 4 Gew.-%, bezogen auf den Zement, liegt.

3. Dämmstoffzusammensetzung gemäss Anspruch 2, **dadurch gekennzeichnet, dass** das Wasserrückhaltemittel ein Stärkeether, Cellulosederivat, Welan Gum oder ein synthetischer Verdicker, insbesondere eine Hydroxyalkylmethylcellulose, bevorzugt eine Hydroxypropylmethylcellulose oder eine Hydroxyethylmethyl-cellulose, ist.

4. Dämmstoffzusammensetzung gemäss Anspruch 1, **dadurch gekennzeichnet, dass** das Wasserrückhaltemittel eine anorganische Verbindung ist und dass der Gewichtsanteil der Summe aller anorganischen Wasserrückhaltemittel zwischen 0.2 und 25 Gew.-%, insbesondere zwischen 0.5 und 9 Gew.-%, bevorzugt zwischen 4 und 9 Gew.-%, bezogen auf den Zement, liegt.

5. Dämmstoffzusammensetzung gemäss Anspruch 4, **dadurch gekennzeichnet, dass** Wasserrückhaltemittel ein Mehrschichtsilikat oder ein kalziniertes Kaolin, bevorzugt Metakaolin, ist.

6. Dämmstoffzusammensetzung gemäss einem der vorhergehenden Ansprüche, **dadurch gekennzeichnet, dass** das Verhältnis des Schaumstoffgranulats zu Zement zwischen 30 Gew.-% und 100 Gew.-%, insbesondere zwischen 30 Gew.-% und 75 Gew.-%, bevorzugt zwischen 60 Gew.-% und 75 Gew.-%, liegt.

7. Dämmstoffzusammensetzung gemäss einem der vorhergehenden Ansprüche, **dadurch gekennzeichnet, dass** das zementöse Bindemittel mindestens einen Portlandzement enthält.

8. Dämmstoffzusammensetzung gemäss Anspruch 7, **dadurch gekennzeichnet, dass** das zementöse Bindemittel neben mindestens einem Portlandzement weiterhin mindestens einen Sulfoaluminatzement oder mindestens einen Tonerdeschmelzzement enthält.

9. Dämmstoffzusammensetzung gemäss einem der vorhergehenden Ansprüche, **dadurch gekennzeichnet, dass** das zementöse Bindemittel mindestens einen Tonerdeschmelzzement oder eine andere Aluminatquelle und gegebenenfalls Calciumsulfat, in Form von Anhydrit, Halbhydrat- oder Dihydratgips; und/oder Calciumhydroxid enthält.

10. Dämmstoffzusammensetzung gemäss einem der vorhergehenden Ansprüche, **dadurch gekennzeichnet, dass** das polymere geschlossenzellige Schaumstoffgranulat ein geschlossenzelliges Polystyrolgranulat ist.

11. Dämmstoffzusammensetzung gemäss einem der vorhergehenden Ansprüche, **dadurch gekennzeichnet, dass** polymeres geschlossenzelliges Schaumstoffgranulat eine Schüttdichte zwischen 10 und 20 $kg/m^3$, insbesondere zwischen 12 und 18 $kg/m^3$, aufweist.

12. Dämmstoffzusammensetzung gemäss einem der vorhergehenden Ansprüche, **dadurch gekennzeichnet, dass** die Dämmstoffzusammensetzung zusätzlich mindestens ein Kunststoffdispersionspulver umfasst.

13. Verfahren zur Aushärtung einer Dämmstoffzusammensetzung gemäss einem der Ansprüche 1 bis 12, wobei das zementöse Bindemittel mit dem Schaumstoffgranulat und gegebenenfalls weiteren Bestandteilen, unter Zugabe von Wasser innig vermischt wird, bevor diese Mischung aufgebracht und ausgehärtet wird, **dadurch gekennzeichnet, dass** zunächst das zementöse Bindemittel mit mindestens einem Wasserrückhaltemittel und den gegebenenfalls weiteren Bestandteilen innig vermischt werden, bevor das Bindemittel unter Beigabe von Wasser zunächst nur mit einem Teil des Schaumstoffgranulates gemischt und dann erst der restliche Teil des Schaumstoffgranulates in wenigstens einer Stufe zugesetzt wird.

14. Dämmstoff, **dadurch gekennzeichnet, dass** er aus einer Dämmstoffzusammensetzung gemäss einem der Ansprüche 1 bis 12 und Wasser in einer Menge entsprechend einem Wasser/Zement-Verhältnis 0.7 bis 3, insbesondere 0.7 bis 2.5, bevorzugt 1.1 bis 2.5, erhalten wird.

15. Verfahren zur Aushärtung einer Dämmstoffzusammensetzung gemäss einem der Ansprüche 1 bis 12, **dadurch gekennzeichnet, dass** es einen Schritt des Beimischens von Wasser und des Aushärtens umfasst.

16. Verfahren gemäss Anspruch 15, **dadurch gekennzeichnet, dass** die Gesamtmenge entsprechend einem Wasser/Zement-Verhältnis von 0.7 bis 3, insbesondere 0.7 bis 2.5, bevorzugt 1.1 bis 2.5, erhalten wird.

17. Verwendung einer Dämmstoffzusammensetzung gemäss einem der Ansprüche 1 bis 12, **dadurch gekennzeichnet, dass** die Dämmstoffzusammensetzung nach Vermischung mit Wasser auf einem Boden appliziert und ausgehärtet wird.

18. Verwendung einer Dämmstoffzusammensetzung gemäss einem der Ansprüche 1 bis 12 in einem Estrichaufbau.

EP 1 510 507 A1

**Figur 1**

**Figur 2**

Figur 3

EP 1 510 507 A1

14

**Figur 4**

**Figur 5**

**Europäisches Patentamt**

**EUROPÄISCHER RECHERCHENBERICHT**

Nummer der Anmeldung

EP 03 01 9241

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | AT 379 135 B (PERLMOOSER ZEMENTWERKE AG) 25. November 1985 (1985-11-25) * Seite 2, Zeilen 43-53 * * Seite 3, Zeilen 8-15 * * Seite 5, Zeilen 20-32; Beispiele 1,3 * ----- | 1-3, 6-10,17 | C04B28/02 C04B28/06 C04B16/08 F16L59/00 |
| D,X A | EP 0 819 662 A (WIMBERGER FRANZ) 21. Januar 1998 (1998-01-21) * das ganze Dokument * ----- | 13 7,10,17, 18 | |
| A | DE 200 17 460 U (WIEGAND THOMAS) 18. Januar 2001 (2001-01-18) * Beispiel 6 * ----- | 1,3,7,9, 10,12, 17,18 | |
| A | DE 28 36 855 A (MONTENOVO WERKE HANS HEITMANN; KOCH KALK & BAU GMBH) 13. März 1980 (1980-03-13) * Seite 9, Zeilen 4-12 * ----- | 1,3,9, 10,12, 17,18 | |
| D,A | DE 33 45 550 A (WOLF HEINZ) 4. Juli 1985 (1985-07-04) * das ganze Dokument * ----- | 1-3,9, 10,12, 17,18 | RECHERCHIERTE SACHGEBIETE (Int.Cl.7) C04B F16L |
| A | DE 29 30 615 A (RHODIUS GEB) 19. Februar 1981 (1981-02-19) * Ansprüche 1,3; Beispiel * ----- | 1-3, 9-13,15, 17,18 | |
| A | DE 197 31 485 A (WULFF GMBH U CO) 12. Februar 1998 (1998-02-12) * Seite 4, Zeilen 18-34; Ansprüche * ----- | 1,7,8, 17,18 | |
| A | GB 2 028 299 A (BLUNDELL PERMOGLAZE LTD) 5. März 1980 (1980-03-05) * das ganze Dokument * ----- | 1-5,10 | |

Der vorliegende Recherchenbericht wurde für alle Patentansprüche erstellt

| Recherchenort | Abschlußdatum der Recherche | Prüfer |
|---|---|---|
| Den Haag | 2. Maerz 2004 | Theodoridou, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 03 01 9241

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-03-2004

| Im Recherchenbericht angeführtes Patentdokument | | Datum der Veröffentlichung | Mitglied(er) der Patentfamilie | | Datum der Veröffentlichung |
|---|---|---|---|---|---|
| AT 379135 | B | 25-11-1985 | AT | 379135 A ,B | 25-11-1985 |
| | | | AT | 717379 A | 15-04-1985 |
| EP 0819662 | A | 21-01-1998 | AT | 404588 B | 28-12-1998 |
| | | | AT | 129996 A | 15-05-1998 |
| | | | EP | 0819662 A1 | 21-01-1998 |
| DE 20017460 | U | 18-01-2001 | DE | 20017460 U1 | 18-01-2001 |
| DE 2836855 | A | 13-03-1980 | DE | 2836855 A1 | 13-03-1980 |
| DE 3345550 | A | 04-07-1985 | DE | 3345550 A1 | 04-07-1985 |
| DE 2930615 | A | 19-02-1981 | DE | 2930615 A1 | 19-02-1981 |
| DE 19731485 | A | 12-02-1998 | DE | 19731485 A1 | 12-02-1998 |
| | | | DE | 19802602 A1 | 05-08-1999 |
| GB 2028299 | A | 05-03-1980 | KEINE | | |

EPO FORM P0461

Für nähere Einzelheiten zu diesem Anhang : siehe Amtsblatt des Europäischen Patentamts, Nr.12/82